(19) Europäisches Patentamt
European Patent Office
Office européen des brevets

(11) Publication number: **0 205 588 B1**

## (12) EUROPEAN PATENT SPECIFICATION

(45) Date of publication of patent specification :
**13.03.91 Bulletin 91/11**

(51) Int. Cl.⁵ : **B05D 1/36, B05D 7/00, B32B 5/16**

(21) Application number : **86900543.9**

(22) Date of filing : **23.12.85**

(86) International application number :
**PCT/US85/02533**

(87) International publication number :
**WO 86/03995 17.07.86 Gazette 86/17**

(54) **Process for preparing metal-coated hollow microspheres.**

(30) Priority : **31.12.84 US 687997**

(43) Date of publication of application :
**30.12.86 Bulletin 86/52**

(45) Publication of the grant of the patent :
**13.03.91 Bulletin 91/11**

(84) Designated Contracting States :
**AT BE CH DE FR GB IT LI LU NL SE**

(56) References cited :
FR-A- 1 439 278
GB-A- 1 000 184
US-A- 3 258 477
US-A- 3 365 315
US-A- 3 649 320
US-A- 3 699 050
US-A- 3 915 735
US-A- 3 917 547

(56) References cited :
US-A- 3 988 494
US-A- 4 137 367
US-A- 4 141 751
US-A- 4 143 202
US-A- 4 336 284
US-A- 4 455 343
US-A- 4 474 852
US-A- 4 496 475

(73) Proprietor : **SPHERICAL PRODUCTS CORPORATION**
**601 Cumberland Street**
**Chattanooga, Tennessee 37404 (US)**

(72) Inventor : **WRIGHT, Fredric, A.**
**2223 Morris Hill Road**
**Chattanooga, TN 37404 (US)**

(74) Representative : **von Bülow, Tam, Dipl.-Ing., Dipl.-Wirtsch.-Ing. et al**
**SAMSON & BÜLOW Widenmayerstrasse 5**
**W-8000 München 22 (DE)**

EP 0 205 588 B1

## Description

The present invention relates to a process for preparing metal-coated hollow microspheres and to metal-coated hollow microspheres.U.S.Patent 4,474,852 discloses a process for preparing metal-coated microspheres for producing a hydrophobic colloidal oxide treated core material. The following steps are performed :

a) Depositing on a core material having a particle size between 125 microns and 25,0 mm, an adherent first coat which comprises a film-forming polyurethane and asphalt. Said adherent first code is disolved in a volatile solvent.

b) Mixing and heating the core material and the adherent first code to effect substantially complete vapourization of the solvent.

c) Applying to the thus coated core material a second code comprising a hydrophobic colloidal oxide of an element selected from the group consisting of silicon, titanium, aluminum, zirconium, vanadium, chromium iron or mixtures thereof.

d) Finally cooling the resulting hydrophobic composites to ambient temperature.

An essential step of this process is the heating in order to vaporize the solvent. Further, it should be noted that said US patent expressly states that particles smaller than 125 microns tend to require excessive amounts of the coatings, making the preparation uneconomical. These relatively big particles exhibit poor physical properties. Further, it is difficult to obtain particles having an exposed metal surface.

Therefore, it is the object of the present invention to prepare metal coated hollow microspheres having an exposed metal surface (s).

This object is solved with respect to the process by the features of claim 1 and with respect to the product by the features of claim 16. Further developments of the invention are claimed in subclaims 3 to 15 and 17 to 19.

As general background information the following prior art is mentioned :

U.S. Patent No. 4,137,367 (1979) discloses phyllosilicate minerals which are superficially etched under specific conditions with dilute acid to remove an outer octahedral layer so as to preserve structural integrity. The acid etch is said to expose silanol groups which are receptive to subsequent condensation with an organo-silane in a suitable solvent under mild conditions.

Also known are cellular glass pellet cores that have been bonded to and coated with fly ash particles. Such pellets are rather large, on the order of 0.5 to 20 mm and are described in U.S. Patent No. 4,143,202.

Various coupling agents composed of organo-functional silanes plus an amine silicate and treatments therewith for reinforcing fibers are also known. Such an amine silicate component has a degree of polymerization less than 1000. It is said in U.S. Patent No. 3,649,320 (1976) that the formulation enables better control over the spatial arrangement of the coupling agent about the surface of the reinforcement material.

Efforts to improve the compatibility of organic polymers and resins with pre-heated coal fly ash are disclosed in U.S. Patent No. 4,336,284 (1982). These efforts include partially covering coal fly ash with an essentially hydrophobic mono-molecular partial coating of a chemical agent, the thickness being less than 100°A.

In the past, efforts to dissipate and control static electricity build-up necessitated the use of carbon powder fillers in composite materials. These composite materials, laden with carbon, were used to prevent static electricity build-up in hospitals and, for example, computer centers. Disadvantageously, however, such composites exhibited poor physical properties.

## SUMMARY OF THE INVENTION

The present invention pertains to a product and a process for producing metal-coated hollow microspheres. The process comprises vigorously affixing hollow microspheres with an adhesive binder to coat the hollow microspheres, adding metal flakes to the thus coated hollow microspheres, slowly and uniformly heating the microsphere-binder-metal intermediate product to a temperature of up to about 176, 67°C (350°F), thereafter intermittently admixing or tumbling (i.e. agitating) the heated hollow-microsphere-binder-metal intermediate product in the absence of further heating so as to cure the binder whereby the resulting product, metal-coated hollow microspheres, is obtained, and subsequently recovering the product.

## DETAILED DESCRIPTION OF THE INVENTION

The process of the present invention comprises, generally, the following combination of steps. A selected quantity of hollow microspheres is vigorously admixed and blended with an adhesive, preferably a thermosetting adhesive, until the hollow microspheres are wet-out, i.e. coated with the adhesive binder. Next, the desired metal, in the form of flakes, is slowly added to the wet-out hollow microspheres thereby providing metal-coated hollow microspheres having exposed metallic surfaces. Subsequently, the metal flakes are permanently bonded to the hollow microspheres by curing the binder which includes slowly and uniformly heating the microspheres to a maximum temperature of about 176, 7°C. Following this curing procedure, the metal coated hollow microspheres are intermittently mixed or intermittently tumbled, in the absence of any further heating, until the metal-coated hollow microspheres are dry. The resulting metal-coated hollow microspheres are then recovered.

More particularly, the process for preparing metal-coated hollow microspheres according to the present invention comprises : (a) vigorously attiring a major quantity of hollow microspheres with about 3 to about 6 weight percent (based on the weight of the final product) of a thermosetting binder adhesive until the hollow microspheres are wet-out ; (b) slowly adding metal flakes having an average size of 6-10 microns to the thus wet-out hollow microspheres from step (a) until the wet-out hollow microspheres are fully coated with the metal flakes ; (c) binding the metal flakes to the wet-out hollow microspheres by slowly applying heat to raise the temperature of the metal coated-hollow microspheres from step (b) to a temperature between about 104,4°C and about 115,6°C and (d) intermittently agitating the metal-coated hollow microspheres from step (c) in the absence of any further heating until the resultant metal-coated hollow microspheres are dry.

During the initial admixing of the hollow microspheres with the binder, heat can be applied to raise the temperature of the mixture in the range of about 48,9°C to about 82,2°C and preferably between 60,0°C and 71,1°C. The present process is essentially a solventless one.

In the above-described process, the adhesive binder initially introduced into a mixing vessel which has already been charged with a quantity of cenospheres, i.e. microspheres. Suitable techniques for applying the binder to the microspheres include the spraying or misting methods as well as directly pouring the binder onto the microspheres. The adhesive can thus be introduced into the vessel in the form of a mist, liquid or vapor. During this application, however, the microspheres and adhesive binder should be agitated so as to insure proper coating of the microspheres.

Next, a desired quantity of metal flakes is added, preferably slowly, to the mixing vessel. The metal flake addition continues until the microspheres, previously coated with the uncured adhesive binder, are fully covered by metal flakes. The metal flakes tend to stick to the uncured adhesive binder. An acceptable and suitable metal flake coating is readily determined by visual inspection. For more critical end-use applications, more control may be required and in such cases inspection of periodic samples, for example, under a 40 power microscope is an exemplary control technique.

Representative end use applications of the products of the present invention include :

(a) use in composite materials to control static electricity in critical applications such as in operating rooms and aircraft ;

(b) use in shielding layers in microcircuitry, such as printed circuit boards ; and

(c) use in molding wherein either solid or flexible substrates require an outer layer having electrically conductive properties for radio frequency shielding. Suitable molding processes include injection molding or powder-in-mold-coating techniques.

The hollow microspheres suitable for use in the present invention include a wide variety of commercial-grade microsphere products. Generally, the hollow microspheres have an average particle size ranging from about 60 microns up to about 180 microns. The hollow microspheres can, of course, have larger diameters, but generally the average diameter falls within the above-stated range. More particularly, the hollow microspheres have an average particle size diameter ranging between 100 microns and 180 microns and still more particularly from 100 to 150 microns. More advantageously, the microspheres have a narrow distribution of average particle sizes. The size of the hollow microspheres employed in the present process, from an average diameter particle size perspective, will affect the weight percent of the metal flake employed in the present process. The larger the hollow microspheres are, the greater is the quantity of metal flakes required.

Advantageously, hollow fly ash microspheres are employed in the present process to produce the present products. Such hollow microspheres exhibit high compressive strengths and thus can withstand considerable amounts of shear generated in intensive mixing. An exemplary fly ash hollow microsphere, suitable for use herein, is described in Table 1, below.

## TABLE I

## Chemical Analysis of Typical Fly
## Ash Hollow Microspheres

| Ingredient | % by Weight |
|---|---|
| Silica (as $SiO_2$) | 55.0-66.0 |
| Alumina (as $Al_2O_3$) | 25.0-30.0 |
| Iron Oxides (as $Fe_2O_2$) | 4.0-10.0 |
| Calcium (as CaO) | 0.2-0.6 |
| Magnesium (as MgO) | 1.0-2.0 |
| Alkalai (as $Na_2O$, $K_2O$) | 0.5-4.0 |

The hollow microspheres are essentially dry ; that is, preferably they are substantially water-free prior to use in the present invention.

In the process of the present invention, the microspheres are admixed with about 3 to about 6 weight percent of a binder adhesive, based on the weight of the final product. The binder adhesive can also be used in a lesser amount ranging from about 3 to about 4 weight percent, again based on the weight of the final product.

The adhesive binder employed in the present process is preferably a thermosetting type adhesive. More particularly, the binder comprises an organo-functional silane having organo-reactive radical functional groups that can be polymerized at elevated temperatures, along with a reactive diluent. The diluent tends to extend the silane and also co-polymerizes with it.

The inorganic moiety of the silane molecule attaches to the microsphere at the lower temperatures described in the admixing step, and is covalently bonded thereto by a hydrolysis reaction. During the curing step, the organic moiety of the silane molecule co-polymerizes and cross-links with the reactive diluent to form a thermosetting polymer which binds the metal flakes to the hollow microspheres.

An exemplary organo-functional silane product is, for example, 3[2 (vinyl benzylamino) ethylamino] propyltrimethoxy silane. suitable reactive copolymerizable constituents include, for example, various lactones such as gamma-butyrolactone.

The metal flakes employed in the present invention are very small sized. The flakes should have as low an average flake size as feasible. The larger the average flake size, the more difficult it is to provide a smooth finish with a paint or other coating incorporating such hollow microspheres. Also, metal flake to microsphere bonding is inconsistent at large particle sizes. More particularly, the average size of the metal flakes can range, for example, from about 2 microns up to and including about 10 microns. Preferably, the average size of metal flakes ranges from about 6 microns to about 10 microns. Advantageously this latter range results in an aesthetically pleasing product suitable for desired end-use applications. Representative metals employed in flake form in the process of the present invention of include, for example, zinc, aluminium, silver, copper, stainless steel, platinum and gold.

Typically, the metal flakes are vigorously blended with the microspheres coated with binder adhesive in an amount ranging from about 15 to about 30 weight percent of the weight of the adhesive binded coated hollow microspheres. Particularly, and more preferably, the metal flakes are added in an amount ranging from about 17 weight percent to about 25 weight percent. Most advantageously, the metal flakes are added in an amount of about 18 to about 22 weight percent. This latter weight percent range provides most advantageous results when the hollow microspheres have an average particle size average of about 165-170 microns. Excessive metal flakes can be easily removed at this stage or during subsequent work-up of the final product.

During the curing step, the temperature is preferably raised and maintained lower than about 176,7°C and advantageously lower than 148, 89°C. More particularly, the temperature is subsequently uniformly raised within several minutes until, by visual observation or by other means, it is apparent that the thermosetting binding adhesive has commenced curing. Typically, after the temperature has been slowly raised up to about 104,4°C to about 115,6°C, the binder will begin curing within a matter of a few minutes. In large production runs, this

4

step can be thermostatically controlled in conjunction with suitable timing mechanisms.

The heating step of the present invention is critical. Excessive heating of an excessive rate of applying heat leads to improperly cured products and defects which result, for example, from the difference of coefficient of expansion for the metal flakes and that of the hollow microspheres. Thus, excessive heat expands the metal flakes breaking them loose from the hollow microsphere during step (c).

After the binder begins curing, the product is very carefully, but intermittently, tumbled or admixed on a cyclic basis. The intermittent tumbling can occur off and on for several minutes or longer. For example, in a blender, mixer, or other similar conventional apparatus, the products being cured are left in a (quiescent state for a few minutes and then admixed or tumbled for a very brief period of time, generally about one-half of minute, followed by a quiescent state. This intermittent cycling or affixing/tumbling can occur about 15-20 times during this phase of the present invention. During this phase various by-products such as, for example, the water of hydration or methyl alcohol are removed. In addition, intermittent admixing or tumbling insures that the binder adhesive properly cures while, at the same time, the metal flakes are not split off from the microspheres.

The product of the present invention has excellent physical properties and unexpectedly can replace up to about 10 times its weight of plain metal in conventional applications. In addition, a dissipative coating containing such a product has advantageous properties.

## Claims

1. A process for preparing metal-coated hollow microspheres comprising the combination of steps of :
a) vigorously admixing a major quantity of hollow microspheres with a thermosetting binding adhesive until said microspheres are wet-out, said hollow microspheres having an average particle size diameter ranging from about 60 microns to about 180 microns ;
b) slowly adding metal flakes to the thus wet-out microspheres until said microspheres are coated with the said metal flakes ;
c) applying heat and slowly increasing the temperature of the metal coated microspheres from step (b) up to about 176,67°C (350°F) to thereby cure said binder and bind said metal flakes to said microspheres ; and
d) intermittently agitating the metal-coated microspheres from step (c) in the absence of any further heating until said metal-coated microspheres are dry.

2. The process according to claim 1, wherein said thermo-setting binder adhesive comprises a polymerizable organo-silane and a copolymerizable monomer or copolymer.

3. The process according to claim 2, wherein said polymerizable organo-silane is 3[2 (vinyl benzylamino) ethylamino] propyltrimethoxy silane and said copolymerizable monomer is gammabutyrolactone.

4. The process according to claim 1, wherein said thermosetting binder adhesive is added in an amount of about 3 to 4 percent by weight of the final product.

5. The process according to claim 1, wherein said metal flakes have an average size of about 6 to 10 microns.

6. The process according to claim 1, wherein said hollow microspheres have an average particle size of about 100 to about 150 microns.

7. The process according to claim 1, where in said step (c) the temperature is raised to about 104,44°C to about 115,56°C.

8. The process according to claim 1, where in step (a) heat is applied until a temperature of about 60°C to about 71,11°C is obtained.

9. The process according to claim 1, wherein said metal flake is composed of zinc, aluminum, silver, copper, stainless steel, platinum, gold or a combination thereof.

10. The process according to claims 1, 2 and 5, characterized in that an amount of about 3 to about 6 weight percent, based on the weight of the final product, of the thermosetting binder adhesive is admixed in step (a).

11. The process according to claim 10, where in step (b) about 15 to about 30 weight percent metal flakes, relative to said wet-out microspheres of step (a), are added.

12. The process according to claim 11 wherein said microspheres have an average particle size of about 165 to 170 microns and about 18 to about 22 weight percent metal flakes, relative to said wet-out microspheres form step (a), are employed.

13. The process according to claims 1, 2 and 10, characterized in that the metal flakes have an average particle size of about 2 microns to about 10 microns.

14. The process according to claims 2 and 5 and 9 or 2 and 3 and 5 and 9, characterized by pre-heating said microspheres prior to step (a) and continuing said pre-heating until said microspheres are heated to a tem-

5

perature of about 60°C (140°F) to 71,11°C (160°F) and by raising the temperature in step (c) to about 104,44°C (220°F) to about 115,56°C (240°F).

15. The process according to claims 8, 9 and 10, characterized in that the temperature in step (c) is raised to about 104,44°C (220°F) to about 148,89°C (300°F).

## Ansprüche

1. Verfahren zur Herstellung metallbeschichteter hohler Mikrokugeln, welches die Kombination folgender Schritte umfaßt :

a) Kräftiges Vermischen einer größeren Menge von hohlen Mikrokugeln mit einem thermisch aushärtbaren Kleber, bis die Mikrokugeln vollständig benetzt sind, wobei die hohlen Mikrokugeln einen von ungefähr 60 Mikrometer bis ungefähr 180 Mikrometer reichenden mittleren Partikeldurchmesser haben ;

b) langsames Zufügen von Metallschuppen zu den vollständig benetzten Mikrokugeln bis die Mikrokugeln mit den Metallschuppen bedeckt sind ;

c) Zuführen von Hitze und langsames Erhöhen der Temperatur der metallbeschichteten Mikrokugeln gemäß Schritt (b) bis auf ungefähr 176,67°C (350°F), um dadurch den Kleber auszuhärten und die Metallschuppen an die Mikrokugeln zu binden ;

d) intermittierendes Bewegen der metallbeschichteten Mikrokugeln gemäß Schritt (c) ohne weitere Erhitzung, bis die metallbeschichteten Mikrokugeln trocken sind.

2. Verfahren nach Anspruch 1, bei dem der thermisch aushärtbare Kleber ein polymerisierbares organisches Silan und ein copolymerisierbares Monomer oder Copolymer enthält.

3. Verfahren nach Anspruch 2, bei dem das polymerisierbare organische Silan 3-[2- (Vinylbenzylamino)Ethylamino]-Propyltrimethoxysilan und das copolymerisierbare Monomer Gammabutyrolacton ist.

4. Verfahren nach Anspruch 1, bei dem der thermisch aushärtbare Kleber in einer Menge von ungefähr 3 bis 4 Gewichts% des Endproduktes zugefügt wird.

5. Verfahren nach Anspruch 1, bei dem die Metallschuppen eine mittlere Größe von ungefähr 6 bis 10 Mikrometern haben.

6. Verfahren nach Anspruch 1, bei dem die hohlen Mikrokugeln eine mittlere Partikelgröße von ungefähr 100 bis ungefähr 150 Mikrometern haben.

7. Verfahren nach Anspruch 1, bei dem bei Schritt (c) die Temperatur auf ungefähr 104,44°C bis ungefähr 115,56°C angehoben wird.

8. Verfahren nach Anspruch 1, bei dem in Schritt (a) Wärme zugeführt wird, bis eine Temperatur von ungefähr 60°C bis ungefähr 71,11°C erreicht wird.

9. Verfahren nach Anspruch 1, bei dem die Metallschuppe aus Zink, Aluminium, Silber, Kupfer, Edelstahl, Platin, Gold oder einer Kombination davon besteht.

10. Verfahren nach den Ansprüchen 1, 2 und 5, dadurch gekennzeichnet, daß eine Menge von ungefähr 3 bis ungefähr 6 Gewichts%, basierend auf dem Gewicht des Endproduktes, des thermisch aushärtbaren Klebers bei Schritt (a) beigemischt wird.

11. Verfahren nach Anspruch 10, bei dem bei Schritt (b) ungefähr 15 bis ungefähr 30 Gewichts% Metallschuppen, bezogen auf die vollständig benetzten Mikrokugeln gemäß Schritt (a), zugefügt werden.

12. Verfahren nach Anspruch 11, bei dem die Mikrokugeln eine mittlere Partikelgröße von ungefähr 165 bis 170 Mikrometern haben und bei dem ungefähr 18 bis ungefähr 22 Gewichts% Metallschuppen, bezogen auf die vollständig benetzten Mikrokugeln gemäß Schritt (a), verwendet werden.

13. Verfahren nach den Ansprüchen 1, 2 und 10, dadurch gekennzeichnet, daß die Metallschuppen eine mittlere Partikelgröße von ungefähr 2 Mikrometern bis ungefähr 10 Mikrometern haben.

14. Verfahren nach den Ansprüchen 2 und 5 und 9 oder 2 und 3 und 5 und 9, gekennzeichnet durch ein Vorerhitzen der Mikrokugeln vor Schritt (a) und ein Fortführen des Vorerhitzens bis die Mikrokugeln auf eine Temperatur von ungefähr 60°C (140°F) bis 71,11°C (160°F) erhitzt sind un durch eine Erhöhung der Temperatur bei Schritt (c) bis auf ungefähr 104,44°C (220°C) bis ungefähr 115,56°C (240°F).

15. Verfahren nach den Ansprüchen 8, 9 und 10, dadurch gekennzeichnet, daß die Temperatur in Schritt (c) auf ungefähr 104,44°C (220°F) bis ungefähr 148,89°C (300°F) angehoben wird.

## Revendications

1. Procédé de préparation de microsphères creuses revêtues d'un métal, comprenant l'ensemble d'étapes consistant :

a) à mélanger énergiquement une grande quantité de microsphères creuses à un adhésif liant thermodurcissable jusqu'à ce que lesdites microsphères soient mouillées, lesdites microsphères creuses ayant un diamètre moyen de particules compris dans l'intervalle d'environ 60 micromètres à environ 180 micromètres ;

b) à ajouter lentement des paillettes métalliques aux microsphères ainsi mouillées jusqu'à ce que lesdites microsphères soient revêtues avec lesdites paillettes métalliques ;

c) à effectuer un chauffage et une élévation lente de la température des microsphères revêtues de métal de l'étape (b) jusqu'à environ 176,67°C (350°F) pour provoquer ainsi le durcissement dudit liant et la liaison desdites paillettes métalliques auxdites microsphères ; et

d) à agiter de manière intermittente les microsphères revêtues de métal de l'étape (c) en l'absence d'un quelconque chauffage supplémentaire, jusqu'à ce que les microsphères revêtues d'un métal soient sèches.

2. Procédé suivant la revendication 1, dans lequel l'adhésif liant thermodurcissable comprend un silane organique polymérisable et un monomère ou copolymère copolymérisable.

3. Procédé suivant la revendication 2, dans lequel le silane organique polymérisable est le 3-[2-vinylbenzylamino)éthylamino]-propyltriméthoxysilane et le monomère copolymérisable est la gamma-butyrolactone.

4. Procédé suivant la revendication 1, dans lequel l'adhésif liant thermodurcissable est ajouté en une quantité d'environ 3 à 4% en poids du produit final.

5. Procédé suivant la revendication 1, dans lequel les paillettes métalliques possèdent une dimension moyenne d'environ 6 à 10 micromètres.

6. Procédé suivant la revendication 1, dans lequel les microsphères creuses possèdent un diamètre moyen de particules d'environ 100 à 150 micromètres.

7. Procédé suivant la revendication 1, dans lequel, dans l'étape (c), la température est portée à une valeur d'environ 104,44°C à environ 115,56°C.

8. Procédé suivant la revendication 1, dans lequel, dans l'étape (a), un chauffage est effectué jusqu'à ce qu'une température d'environ 60°C à environ 71,11°C soit obtenue.

9. Procédé suivant la revendication 1, dans lequel la paillette métallique est constituée de zinc, d'aluminium, d'argent, de cuivre, d'acier inoxydable, de platine, d'or ou d'une de leurs associations.

10. Procédé suivant les revendications 1, 2 et 5, caractérisé en ce qu'une quantité d'environ 3 à environ 6% en poids, sur la base du poids du produit final, d'un adhésif liant thermodurcissable est mélangée dans l'étape (a).

11. Procédé suivant la revendication 10, dans lequel, dans l'étape (b), environ 15 à environ 30% en poids de paillettes métalliques, par rapport aux microsphères mouillées de l'étape (a), sont ajoutés.

12. Procédé suivant la revendication 11, dans lequel les microsphères possèdent un diamètre moyen de particules d'environ 165 à 170 micromètres, et environ 18 à environ 22% en poids de paillettes métalliques, par rapport aux microsphères mouillées de l'étape (a), sont utilisés.

13. Procédé suivant les revendications 1, 2 et 10, caractérisé en ce que les paillettes métalliques possèdent un diamètre moyen de particules d'environ 2 micromètres à environ 10 micromètres.

14. Procédé suivant les revendications 2 et 5 et 9 ou 2 et 3 et 5 et 9, caractérisé par un préchauffage des microsphères avant l'étape (a) et un maintien dudit préchauffage jusqu'à ce que lesdites microsphères soient chauffées à une température d'environ 60°C (140°F) à 71,11°C (160°F), et par l'élévation de la température dans l'étape (c) à une valeur d'environ 104,44°C (220°F) à environ 115,56°C (240°F).

15. Procédé suivant les revendications 8, 9 et 10, caractérisé en ce que la température dans l'étape (c) est portée à une valeur d'environ 104,44°C (220°F) à environ 148,89°C (300°F).